# EUROPEAN PATENT SPECIFICATION

(11) **EP 4 350 525 B1**
(45) Date of publication and mention of the grant of the patent: **05.11.2025**
(21) Application number: 23790209.3
(22) Date of filing: 30.03.2023
(51) Int. Cl.: G06F 11/36

(54) **IMAGE DETECTION ALGORITHM DEBUGGING METHOD AND APPARATUS, AND DEVICE, MEDIUM AND PROGRAM PRODUCT**
VERFAHREN UND VORRICHTUNG ZUR FEHLERBESEITIGUNG BEI EINEM BILDERKENNUNGSALGORITHMUS SOWIE VORRICHTUNG, MEDIUM UND PROGRAMMPRODUKT
PROCÉDÉ ET APPAREIL DE DÉBOGAGE D'ALGORITHME DE DÉTECTION D'IMAGE, ET DISPOSITIF, SUPPORT ET PRODUIT PROGRAMME

(30) Priority: 03.08.2022 CN 202210926421
(43) Date of publication of application: 10.04.2024
(73) Proprietor: Contemporary Amperex Technology (Hong Kong) Limited, Central, Central And Western District (HK)
(72) Inventor: XIE, Xianfeng, Ningde, Fujian 352100 (CN); CHEN, Jiwei, Ningde, Fujian 352100 (CN); WU, Qian, Ningde, Fujian 352100 (CN)
(74) Representative: Laufhütte, Dieter
(86) International application number: PCT/CN2023/085017
(87) International publication number: WO 2024/027180

(56) References cited:
- CN-A- 113 268 410
- CN-A- 113 568 666
- CN-A- 114 697 743
- CN-A- 114 782 899
- CN-A- 115 809 188
- US-A1- 2014 137 078
- US-A1- 2022 058 110

## Description

The present application is related to Chinese Patent Application No. 2022109264211, filed on August 3, 2022 and entitled "METHOD AND APPARATUS FOR DEBUGGING IMAGE DETECTION ALGORITHM, DEVICE, MEDIUM. AND PROGRAM PRODUCT".

### Technical Field

The present application relates to the field of image processing technologies, and in particular, to a method and an apparatus for debugging an image detection algorithm, a device, a medium, and a program product.

### Background Art

With the development of image technologies and automation technologies, visual inspection systems are increasingly widely used in industrial production. In a visual inspection system, an industrial camera is used to replace human eyes to complete a function such as recognition, measurement, or positioning. The core of the visual inspection system is an image detection algorithm.

In general, common development tools for image detection algorithms include OpenCV, HALCON, VisionPro, and the like. An image detection algorithm based on c++, OpenCV, or HALCON is implemented through pure code, and the image detection algorithm needs to be debugged through a debug interface of a visual inspection program. In the conventional technology, a user needs to input a to-be-debugged image to a debug interface of a visual inspection program, select related information about an image detection algorithm to be debugged, and then debug the image detection algorithm.

In practical applications, an image detection algorithm usually needs to be debugged based on a plurality of to-be-debugged images. However, in the conventional technology, a user needs to sequentially input the plurality of to-be-debugged images to a debug interface of a visual inspection program and select related information about an image detection algorithm to be debugged. As a result, a debug process in the conventional technology is cumbersome.

US 2022/058110 A1 discloses a programming device editing a program by arranging icons of units, the unit representing a processing unit, and linking the units on an editing screen in response to a user operation. CN 114 697 743 A relates to an electronic device and an image processing method thereof, wherein the image displayed by the electronic device can be changed to an image corresponding to the parameter as the parameter corresponding to the algorithm process changes.

### Summary of the Invention

In view of the foregoing problems, the present application provides a method and an apparatus for debugging an image detection algorithm, a device, a medium, and a program product, to solve a problem of a cumbersome debug process in the conventional technology.

According to a first aspect, the present application provides a method for debugging an image detection algorithm according to the claim 1 of the present application. The method includes:
obtaining a debug file, where the debug file includes image indication information of a plurality of images and algorithm indication information of the images;
obtaining the images based on the image indication information of the images, and determining image detection algorithms corresponding to the images based on the algorithm indication information of the images; and
separately executing the corresponding image detection algorithms for the images to obtain detection result information corresponding to the images. The detection result information is used to indicate to modify and debug an operation parameter of an image detection algorithm related to the detection result information.

In the technical solution of this embodiment of the present application, the debug file that includes the image indication information of the plurality of images and the algorithm indication information of the images is obtained; further, the images are obtained based on the image indication information of the images, and the image detection algorithms corresponding to the images are determined based on the algorithm indication information of the images; and further, the corresponding image detection algorithms are separately executed for the images to obtain the detection result information of the images. It can be learned that, compared with the conventional technology, in this embodiment of the present application, the images and the image detection algorithms corresponding to the images are obtained based on the debug file, and then the corresponding image detection algorithms are separately executed for the images to obtain the detection result information of the images, thereby simplifying a debug process and helping improve debug efficiency.

According to the present application, the separately executing the corresponding image detection algorithms for the images to obtain detection result information corresponding to the images includes:
for the images, querying a parameter configuration file based on the image detection algorithms corresponding to the images, to obtain operation parameters of the image detection algorithms corresponding to the images; and
executing the corresponding image detection algorithms for the images based on the operation parameters of the detection algorithms corresponding to the images, to obtain detection result information of the images.

In the technical solution of this embodiment of the present application, for the images, the parameter configuration file is queried based on the image detection algorithms corresponding to the images, to determine the operation parameters of the image detection algorithms corresponding to the images, where the images and the image detection algorithms corresponding to the images are obtained based on the debug file; and further, the corresponding image detection algorithms are executed for the images based on the operation parameters of the image detection algorithms corresponding to the images, to obtain the detection result information corresponding to the images. It can be learned that, compared with the conventional technology, a debug process in this embodiment of the present application is simpler and more intelligent.

According to the present application, the parameter configuration file includes: operation parameters corresponding to different detection functions of different image detection algorithms, where the operation parameters corresponding to the detection functions include operation parameters of different detection actions in the detection functions, and the querying a parameter configuration file based on the image detection algorithms corresponding to the images, to obtain operation parameters of the image detection algorithms corresponding to the images includes:
querying the parameter configuration file based on the image detection algorithms corresponding to the images, to obtain an operation parameter, in the parameter configuration file, that corresponds to at least one detection function in the image detection algorithms corresponding to the images, where the operation parameter corresponding to the detection function includes an operation parameter of at least one detection action in the detection function.

In some embodiments, the method further includes:
receiving a first parameter adjustment instruction, where the first parameter adjustment instruction is used to request to adjust an operation parameter of a target image detection algorithm corresponding to a target image; and
updating the parameter configuration file based on an adjusted operation parameter.

In the technical solution of this embodiment of the present application, the first parameter adjustment instruction used to request to adjust the operation parameter of the target image detection algorithm corresponding to the target image is received, and then the parameter configuration file is updated based on the adjusted operation parameter of the target image detection algorithm, so that the adjusted operation parameter can be used in subsequent image detection.

In some embodiments, the updating the parameter configuration file based on an adjusted operation parameter includes:
re-executing the target image detection algorithm for the target image based on the adjusted operation parameter to obtain first debug detection result information; and
when the first debug detection result information meets a preset condition, performing the step of updating the parameter configuration file based on an adjusted operation parameter.

In the technical solution of this embodiment of the present application, the parameter configuration file is updated based on the adjusted operation parameter when the first debug detection result information meets the preset condition. In this way, the parameter configuration file is updated when the operation parameter of the target image detection algorithm is debugged successfully, thereby improving efficiency of updating the parameter configuration file.

In some embodiments, the detection result information includes error prompt information, and the error prompt information is used to indicate to modify and debug an operation parameter of a target image detection algorithm corresponding to the error prompt information.

In the technical solution of this embodiment of the present application, the detection result information includes the error prompt information, so that a user can quickly and accurately locate, based on the error prompt information, the target image detection algorithm to be debugged, thereby helping improve debug efficiency.

In some embodiments, the method further includes:
receiving a second parameter adjustment instruction, where the second parameter adjustment instruction is used to request to adjust a region of interest ROI parameter corresponding to the target image; and
re-executing, for the target image based on an adjusted ROI parameter, the target image detection algorithm corresponding to the target image to obtain second debug detection result information.

In some embodiments, the obtaining a debug file includes:
when the corresponding image detection algorithms are separately executed for the images, obtaining the image indication information of the images and the algorithm indication information corresponding to the images; and
generating the debug file based on the image indication information of the images and the algorithm indication information corresponding to the images.

In the technical solution of this embodiment of the present application, when the corresponding image detection algorithms are operated for the images, the image indication information of the images and the algorithm indication information of the image detection algorithms corresponding to the images can be obtained, and then the debug file is generated based on the image indication information of the images and the algorithm indication information of the image detection algorithms corresponding to the images, so that the images and the image detection algorithms corresponding to the images can be obtained based on the debug file in an image detection algorithm debug stage. It can be learned that, compared with the conventional technology in which a user needs to separately input a to-be-debugged image and a corresponding image detection algorithm, in this technical solution, the images and the image detection algorithms corresponding to the images can be obtained based on the debug file in the image detection algorithm debug stage, without sequential manual input by the user, thereby greatly simplifying a debug process.

In some embodiments, the algorithm indication information includes an algorithm identifier, and the determining image detection algorithms corresponding to the images based on the algorithm indication information of the images includes:
querying a correspondence between an algorithm identifier and a detection algorithm based on algorithm identifiers of the images, and determining the image detection algorithms corresponding to the images.

In some embodiments, the algorithm indication information includes capturing source information, and the determining image detection algorithms corresponding to the images based on the algorithm indication information of the images includes:
querying a correspondence between an image capturing source and a detection algorithm based on capturing source information of the images, and determining the image detection algorithms corresponding to the images.

According to a second aspect, the present application further provides an apparatus for debugging an image detection algorithm according to the claim 9 of the present application. The apparatus includes:
a first obtaining module configured to obtain a debug file, where the debug file includes image indication information of a plurality of images and algorithm indication information of the images;
a second obtaining module configured to obtain the images based on the image indication information of the images;
a determination module configured to determine image detection algorithms corresponding to the images based on the algorithm indication information of the images; and
an execution module configured to separately execute the corresponding image detection algorithms for the images to obtain detection result information corresponding to the images. The detection result information is used to indicate to modify and debug an operation parameter of an image detection algorithm related to the detection result information.

According to a third aspect, the present application further provides a computer device, where the computer device includes a processor and a memory, the memory stores a computer program, and when the processor executes the computer program, the steps of the method according to any one of the embodiments of the first aspect are implemented.

According to a fourth aspect, the present application further provides a computer-readable storage medium, where the computer-readable storage medium stores a computer program, and when the computer program is executed by a processor, the steps of the method according to any one of the embodiments of the first aspect are implemented.

According to a fifth aspect, the present application further provides a computer program product, where the computer program product includes a computer program, and when the computer program is executed by a processor, the steps of the method according to any one of the embodiments of the first aspect are implemented.

The foregoing description is only an overview of the technical solutions of the present application. To more clearly understand the technical means of the present application to implement same according to the content of the description, and to make the foregoing and other objectives, features and advantages of the present application more obvious and understandable, specific implementations of the present application are exemplarily described below.

### Brief Description of the Drawings

Various other advantages and benefits will become apparent to those of ordinary skill in the art upon reading the following detailed description of preferred implementations. Accompanying drawings are merely for the purpose of illustrating the preferred implementations and are not to be construed as limiting the present application. Moreover, like components are denoted by like reference numerals throughout the accompanying drawings. In the drawings:
FIG. 1 is a schematic flowchart of a method for debugging an image detection algorithm according to an embodiment of the present application;
FIG. 2 is a schematic flowchart of a method for debugging an image detection algorithm according to another embodiment of the present application;
FIG. 3 is a schematic diagram of a detection algorithm and a corresponding parameter configuration according to an embodiment of the present application;
FIG. 4 is a schematic flowchart of a method for debugging an image detection algorithm according to another embodiment of the present application;
FIG. 5 is a schematic flowchart of a method for debugging an image detection algorithm according to another embodiment of the present application;
FIG. 6 is a schematic diagram of a main debug interface according to an embodiment of the present application;
FIG. 7 is a schematic diagram of a debug sub-interface according to embodiment of the present application;
FIG. 8 is a schematic diagram of a structure of an apparatus for debugging an image detection algorithm according to an embodiment of the present application; and
FIG. 9 is a schematic diagram of a structure of a computer device according to an embodiment of the present application.

### Detailed Description of Embodiments

Embodiments of the technical solutions of the present application will be described in detail below with reference to the accompanying drawings. The following embodiments are merely intended to more clearly illustrate the technical solutions of the present application, so they merely serve as examples, but are not intended to limit the scope of protection of the present application.

Unless otherwise defined, all technical and scientific terms used herein have the same meanings as those commonly understood by those skilled in the art to which the present application belongs. The terms used herein are merely for the purpose of describing specific embodiments, but are not intended to limit the present application. The terms "including" and any variations thereof in the specification and the claims of the present application and in the foregoing brief description of the drawings are intended to cover non-exclusive inclusions.

With the development of image technologies and automation technologies, visual inspection systems are increasingly widely used in industrial production. In a visual inspection system, an industrial camera is used to replace human eyes to complete a function such as recognition, measurement, or positioning. The core of the visual inspection system is an image detection algorithm.

In general, common development tools for image detection algorithms include OpenCV, HALCON, VisionPro, and the like. An image detection algorithm based on c++, OpenCV, or HALCON is implemented through pure code, and the image detection algorithm needs to be debugged through a debug interface of a visual inspection program. In the conventional technology, a user needs to input a to-be-debugged image to a debug interface, select related information about an image detection algorithm to be debugged, and then perform debugging.

In practical applications, an image detection algorithm usually needs to be debugged based on a plurality of to-be-debugged images. For example, an image detection algorithm needs to be debugged based on a plurality of images continuously captured by a camera (different images may have different exposure rates), or an image detection algorithm needs to be debugged based on a plurality of images simultaneously captured by a plurality of cameras at different angles. However, in the conventional technology, a user needs to sequentially input the plurality of to-be-debugged images to a debug interface of a visual inspection program and select related information about an image detection algorithm to be debugged. As a result, a debug process in the conventional technology is cumbersome.

In view of the above, through researches, the applicant proposes obtaining a debug file including image indication information of a plurality of images and algorithm indication information of the images in an image detection algorithm debug stage, and then obtaining the images and image detection algorithms corresponding to the images based on the debug file, so that the corresponding image detection algorithms are separately executed for the images to obtain detection result information corresponding to the images. In this way, a visual debug application program provided in the embodiments of the present application is applicable to image input in an application scenario of multi-image debugging. It can be learned that, compared with the conventional technology, in the embodiments of the present application, the manner of obtaining the images and the image detection algorithms corresponding to the images based on the debug file simplifies a debug process and helps improve debug efficiency.

In addition, in the present application, a highly visual image detection algorithm debug system is implemented by using a hierarchical parameter configuration file, a hierarchical algorithm code structure, and a general-purpose debug interface. High visualization lies in that an underlying detection action of an image detection algorithm and a corresponding region of interest ROI can be displayed.

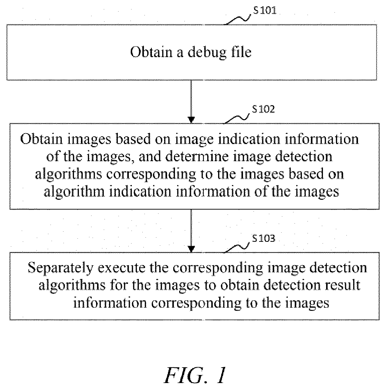

In an embodiment, FIG. 1 is a schematic flowchart of a method for debugging an image detection algorithm according to an embodiment of the present application. In this embodiment of the present application, an example in which the method is applied to a computer device is used for description. For example, the computer device may include but is not limited to various personal computers, notebook computers, and tablet computers.

As shown in FIG. 1, the method in this embodiment of the present application may include the following steps:

In step S101, a debug file is obtained.

In this step, the computer device may obtain the debug file, and the debug file may include image indication information of a plurality of images and algorithm indication information of the images. Certainly, the debug file may alternatively include other information. This is not limited in this embodiment of the present application.

For example, the debug file in this embodiment of the present application may be in an IMF file format; or certainly, may be in another file format. This is not limited in this embodiment of the present application.

In this embodiment of the present application, image indication information of any image may be used to uniquely identify the image. For example, image indication information of any image may include but is not limited to file name information of the image and storage directory information of the image.

In this embodiment of the present application, algorithm indication information of any image may be used to uniquely identify an image detection algorithm corresponding to the image. For example, algorithm indication information of any image may include but is not limited to an algorithm identifier of the image and/or capturing source information of the image. The algorithm identifier of the image is used to indicate an image detection algorithm corresponding to the image. The capturing source information of the image is used to indicate capturing camera information corresponding to the image, and the capturing camera information is associated with the image detection algorithm corresponding to the image. For example, the capturing camera information may include but is not limited to an identifier of a camera used to capture the image and/or an identifier of a camera group to which the camera belongs.

It should be noted that a format of the debug file in this embodiment of the present application is extensible, to adapt to changes of interface parameters.

In a possible implementation, the computer device may obtain the image indication information of the images and the algorithm indication information corresponding to the images when separately operating the corresponding image detection algorithms for the images, and generate the debug file based on the image indication information of the images and the algorithm indication information corresponding to the images.

In this implementation, the computer device may obtain the image indication information of the images and the algorithm indication information corresponding to the images when separately operating the corresponding image detection algorithms for the images (that is, in an image detection algorithm operating stage), and then generate the debug file based on the image indication information of the images and the algorithm indication information corresponding to the images, so that the images and the image detection algorithms corresponding to the images can be obtained based on the debug file in an image detection algorithm debug stage.

It can be learned that, compared with the conventional technology in which a user needs to separately input a to-be-debugged image and a corresponding image detection algorithm, in this implementation, the images and the image detection algorithms corresponding to the images can be obtained based on the debug file in the image detection algorithm debug stage, without sequential manual input by the user, thereby greatly simplifying a debug process.

In another possible implementation, the computer device may receive a debug file input by a user.

In this implementation, the computer device may receive the debug file input by the user on a main debug interface, where the debug file may be pre-generated by the computer device, or may be pre-received by the computer device from another device.

Certainly, the computer device may alternatively obtain a debug file in another manner. This is not limited in this embodiment of the present application.

In step S102, the images are obtained based on the image indication information of the images, and image detection algorithms corresponding to the images are determined based on the algorithm indication information of the images.

In this step, the computer device may parse the debug file obtained in step S101, to obtain the image indication information of the plurality of images and the algorithm indication information of the images.

In this step, the computer device may separately obtain the images based on the image indication information of the images, where image indication information of any image may be used to uniquely identify the image. For example, if image indication information of any image can include file name information of the image and storage directory information of the image, the computer device may obtain an image corresponding to the file name information of the image from a corresponding storage location based on the storage directory information of the image.

In this step, the computer device may determine the image detection algorithms corresponding to the images based on the algorithm indication information of the images, where algorithm indication information of any image may be used to uniquely identify an image detection algorithm corresponding to the image.

It should be noted that the image detection algorithm corresponding to the any image in this step may be a collective name of detection algorithms. For example, the image detection algorithm corresponding to any image may be an image detection algorithm, or may be a detection action in a detection function of an image detection algorithm.

For example, algorithm indication information of any image may include an algorithm identifier of the image and/or capturing source information of the image.

In a possible implementation, if the algorithm indication information includes an algorithm identifier, the computer device may query a correspondence between an algorithm identifier and a detection algorithm based on algorithm identifiers of the images, and determine the image detection algorithms corresponding to the images.

In this embodiment of the present application, the correspondence between an algorithm identifier and a detection algorithm is preset in the computer device, where the correspondence between an algorithm identifier and a detection algorithm is used to indicate a correspondence between different algorithm identifiers and corresponding image detection algorithms. For example, the correspondence between an algorithm identifier and a detection algorithm is used to indicate a correspondence between an algorithm identifier 1 and a corresponding image detection algorithm 1, and a correspondence between an algorithm identifier 2 and a corresponding image detection algorithm 2 and image detection algorithm 3.

In this implementation, for the algorithm identifiers of the images, the computer device queries the correspondence between an algorithm identifier and a detection algorithm based on the algorithm identifiers of the images, and may determine that image detection algorithms corresponding to the algorithm identifiers of the images are image detection algorithms corresponding to the images.

For example, assuming that an algorithm identifier of an image is the algorithm identifier 1, the computer device queries a correspondence between an algorithm identifier and a detection algorithm based on the algorithm identifier of the image, and may determine that the image detection algorithm 1 corresponding to the algorithm identifier 1 is an image detection algorithm corresponding to the image.

In another possible implementation, if the algorithm indication information includes capturing source information, the computer device may query a correspondence between an image capturing source and a detection algorithm based on capturing source information of the images, and determine the image detection algorithms corresponding to the images.

In this embodiment of the present application, the correspondence between an image capturing source and a detection algorithm is preset in the computer device, where the correspondence between an image capturing source and a detection algorithm is used to indicate a correspondence between different capturing source information and corresponding image detection algorithms. For example, the correspondence between an image capturing source and a detection algorithm is used to indicate a correspondence between capturing source information 1 and a corresponding image detection algorithm 1, a correspondence between capturing source information 2 and a corresponding image detection algorithm 2 and image detection algorithm 3, and a correspondence between capturing source information 3 and a corresponding image detection algorithm 4.

In this implementation, for the capturing source information of the images, the computer device queries the correspondence between an image capturing source and a detection algorithm based on the capturing source information of the images, and may determine that an image detection algorithm corresponding to the capturing source information of the images is an image detection algorithm corresponding to the images.

For example, assuming that capturing source information of an image is the capturing source information 3, the computer device queries a correspondence between an image capturing source and a detection algorithm based on the capturing source information of the image, and may determine that the image detection algorithm 4 corresponding to the capturing source information 3 is an image detection algorithm corresponding to the image.

Certainly, the computer device may alternatively separately determine the image detection algorithms corresponding to the images based on the algorithm indication information of the images in another manner.

In step S103, the corresponding image detection algorithms are separately executed for the images to obtain detection result information corresponding to the images.

In this step, the image detection algorithms corresponding to the images that are determined in step S102 are separately executed for the images to obtain the detection result information corresponding to the images. The detection result information is used to indicate to modify and debug an operation parameter of an image detection algorithm related to the detection result information, so that a user can modify and debug, based on the detection result information, an operation parameter of an image detection algorithm to be debugged.

It should be understood that, for each image, the computer device may obtain a related parameter of an image detection algorithm corresponding to the image, and then execute the image detection algorithm based on the related parameter of the image detection algorithm corresponding to the image, to obtain detection result information corresponding to the image.

For example, detection result information corresponding to any image in this embodiment of the present application may be displayed at a corresponding location in an image result. For example, assuming that the detection result information includes outer size measurement information and inner size measurement information, outer size measurement information corresponding to the any image may be displayed at a corresponding outer location in an image result, and inner size measurement information may be displayed at a corresponding inner location in the image result.

For another example, the detection result information corresponding to the any image in this embodiment of the present application may be displayed at any location in the image result.

Certainly, the detection result information corresponding to the any image in this embodiment of the present application may alternatively be displayed at another location (for example, in another preset region on the main debug interface). This is not limited in this embodiment of the present application.

In the foregoing method for debugging an image detection algorithm, the debug file that includes the image indication information of the plurality of images and the algorithm indication information of the images is obtained; further, the images are obtained based on the image indication information of the images, and the image detection algorithms corresponding to the images are determined based on the algorithm indication information of the images; and further, the corresponding image detection algorithms are separately executed for the images to obtain the detection result information corresponding to the images. It can be learned that, compared with the conventional technology, in this embodiment of the present application, the images and the image detection algorithms corresponding to the images are obtained based on the debug file, and then the corresponding image detection algorithms are separately executed for the images to obtain the detection result information corresponding to the images, so that the user can modify and debug, based on the detection result information, the operation parameter of the image detection algorithm to be debugged, thereby simplifying a debug process and helping improve debug efficiency.

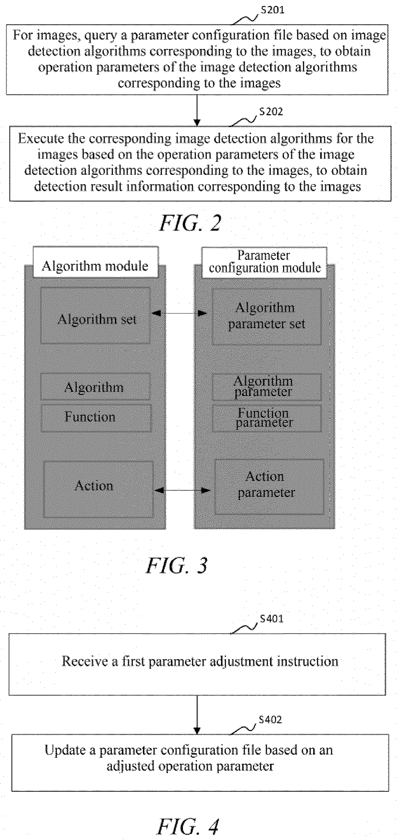

In an embodiment, FIG. 2 is a schematic flowchart of a method for debugging an image detection algorithm according to another embodiment of the present application. On the basis of the foregoing embodiment, related content of step S103 is described in this embodiment of the present application. As shown in FIG. 2, the method in this embodiment of the present application may further include the following steps:

In step S201, for the images, a parameter configuration file is queried based on the image detection algorithms corresponding to the images, to obtain operation parameters of the image detection algorithms corresponding to the images.

For example, the parameter configuration file in this embodiment of the present application may include but is not limited to operation parameters corresponding to different detection functions of different image detection algorithms, where an operation parameter corresponding to each detection function may include operation parameters of different detection actions in the detection function.

For example, the parameter configuration file in this embodiment of the present application may be in an XML file format; or certainly, may be in another file format. This is not limited in this embodiment of the present application.

It should be noted that each image detection algorithm in this embodiment of the present application may include a plurality of detection functions, each detection function may include a plurality of detection actions, and a corresponding operation parameter is set for each detection action. Correspondingly, code in this embodiment of the present application includes three levels of functions: an algorithmic function, a functional function, and an action function.

It should be understood that the parameter configuration file in this embodiment of the present application may include operation parameters of different detection actions in different detection functions of different image detection algorithms supported by a visual debug application program provided in this embodiment of the present application.

The parameter configuration file in this embodiment of the present application may use a four-level structure: a task, a subtask, a subitem, and a parameter (para). The task corresponds to an image detection algorithm, the subtask corresponds to a detection function, the subitem corresponds to a detection action, and the para corresponds to an operation parameter.

FIG. 3 is a schematic diagram of a detection algorithm and a corresponding parameter configuration according to an embodiment of the present application. As shown in FIG. 3, in this embodiment of the present application, an algorithm module includes an algorithm set submodule, an algorithm submodule, a function submodule, and an action submodule, and a parameter configuration module includes an algorithm parameter set submodule, an algorithm parameter submodule, a function parameter submodule, and an action parameter submodule. The algorithm set submodule corresponds to the algorithm parameter set submodule, the algorithm submodule corresponds to the algorithm parameter submodule, the function submodule corresponds to the function parameter submodule, and the action submodule corresponds to the action parameter submodule.

It should be noted that the parameter configuration file in this embodiment of the present application is organized in a hierarchical structure, thereby helping implement hierarchical display of an image detection algorithm, a detection function, and a detection action.

In this step, for the images, the computer device queries the parameter configuration file based on the image detection algorithms corresponding to the images, to obtain a query result, where the query result may include the operation parameters corresponding to the image detection algorithms in the parameter configuration file. Further, the computer device may obtain, based on the query result, the operation parameters of the image detection algorithms corresponding to the images.

In an embodiment, the computer device may query the parameter configuration file based on the image detection algorithms corresponding to the images, to obtain an operation parameter, in the parameter configuration file, that corresponds to at least one detection function in the image detection algorithms corresponding to the images, where an operation parameter corresponding to each detection function may include an operation parameter of at least one detection action in the detection function. That is, the operation parameters of the image detection algorithms corresponding to the images in this embodiment of the present application may include but is not limited to an operation parameter corresponding to at least one detection function of the image detection algorithms corresponding to the images, where an operation parameter corresponding to each detection function may include an operation parameter of at least one detection action in the detection function.

For example, if the image detection algorithms corresponding to the images refer to an image detection algorithm 1, the computer device queries the parameter configuration file based on the image detection algorithm 1, and may determine that an operation parameter of a preset detection action in a preset detection function of the image detection algorithm 1 is an operation parameter of the image detection algorithm.

For another example, if the image detection algorithms corresponding to the images refer to a detection action 1 and a detection action 2 in a detection function 1 of the image detection algorithm 1, the computer device queries the parameter configuration file based on the detection action 1 and the detection action 2 in the detection function 1 of the image detection algorithm 1, and may determine that operation parameters of the detection action 1 and the detection action 2 in the detection function 1 of the image detection algorithm 1 are operation parameters of the image detection algorithm.

In step S202, the corresponding image detection algorithms are executed for the images based on the operation parameters of the image detection algorithms corresponding to the images, to obtain the detection result information corresponding to the images.

In this step, for the images, the computer device may execute the corresponding image detection algorithms for the images based on the operation parameters, determined in step S201, of the image detection algorithms corresponding to the images, to obtain the detection result information corresponding to the images.

For example, if the operation parameters of the image detection algorithms corresponding to the images can include the operation parameter of the preset detection action in the preset detection function of the image detection algorithm 1, the computer device may perform the preset detection action in the preset detection function of the image detection algorithm 1 for the images based on the operation parameter of the preset detection action in the preset detection function of the image detection algorithm 1, to obtain detection result information corresponding to the images, where the detection result information may include detection information corresponding to the preset detection function and/or the preset detection action.

For another example, if the operation parameters of the image detection algorithms corresponding to the images can include the operation parameters of the detection action 1 and the detection action 2 in the detection function 1 of the image detection algorithm 1, the computer device may execute the detection action 1 and the detection action 2 in the detection function 1 of the image detection algorithm 1 for the images based on the operation parameters of the detection action 1 and the detection action 2 in the detection function 1 of the image detection algorithm 1, to obtain detection result information corresponding to the images, where the detection result information may include detection information corresponding to the detection function 1, the detection action 1, and/or the detection action 2.

It should be noted that, if any image detection algorithm needs to detect a plurality of images, detection functions of the image detection algorithm may be grouped based on the images, or the images may be grouped based on detection functions, to meet different service requirements, which is of high flexibility.

In this embodiment of the present application, for the images, the parameter configuration file is queried based on the image detection algorithms corresponding to the images, to determine the operation parameters of the image detection algorithms corresponding to the images, where the images and the image detection algorithms corresponding to the images are obtained based on the debug file; and further, the corresponding image detection algorithms are executed for the images based on the operation parameters of the image detection algorithms corresponding to the images, to obtain the detection result information corresponding to the images, so that the user can determine, based on the detection result information, an image detection algorithm to be debugged and perform debugging. It can be learned that, compared with the conventional technology, a debug process in this embodiment of the present application is simpler and more intelligent.

In an embodiment, FIG. 4 is a schematic flowchart of a method for debugging an image detection algorithm according to another embodiment of the present application. On the basis of the foregoing embodiment, related content of "updating, by the computer device, the parameter configuration file based on a received first parameter adjustment instruction" is described in this embodiment of the present application. As shown in FIG. 4, on the basis of the embodiment shown in FIG. 1 or FIG. 2, the method in this embodiment of the present application may further include the following steps:

In step S401, a first parameter adjustment instruction is received.

In this step, the computer device may receive the first parameter adjustment instruction input by the user on a debug sub-interface, where the first parameter adjustment instruction is used to request to adjust an operation parameter of a target image detection algorithm corresponding to a target image.

For example, the main debug interface in this embodiment of the present application may include a display region for an image detection algorithm, a display region for a detection function of an image detection algorithm, a display region for a detection action in a detection function, an input image list region, and an output image list region, and the debug sub-interface may include a parameter modification region and a debug image display region.

For example, the computer device may switch from the main debug interface to the debug sub-interface when detecting that the user clicks a preset control on the main debug interface. For example, assuming that the main debug interface displays controls respectively corresponding to a detection action 1 and a detection action 2 in a detection function 1 of a current image retrieval algorithm, the computer device may switch from the main debug interface to the debug sub-interface when detecting that the user clicks a control corresponding to the detection action 2 (or referred to as the target detection action in the target image detection algorithm, or simply referred to as the target image detection algorithm), where the debug sub-interface may display a modification region for an operation parameter corresponding to the detection action 2 and a display region for a target image corresponding to the detection action 2, so that the user can input an adjusted operation parameter corresponding to the detection action 2 in the modification region.

Certainly, the computer device may alternatively receive the first parameter adjustment instruction in another manner.

In an embodiment, detection result information corresponding to any image includes error prompt information, where the error prompt information is used to indicate to modify and debug an operation parameter of a target image detection algorithm corresponding to the error prompt information, so that the user can input the first parameter adjustment instruction based on the error prompt information. Correspondingly, the first parameter adjustment instruction is used to request to adjust the operation parameter of the target image detection algorithm.

It should be noted that the error prompt information may be displayed in a corresponding image result in special font or with an icon in a special form. For example, assuming that an error occurs during execution of a target detection action in a target image detection algorithm corresponding to any image, in detection result information corresponding to the image, detection information of the target detection action is displayed in red font (indicating error prompt information), and detection information of other normally executed detection actions is displayed in green font. Certainly, the error prompt information may alternatively be displayed in another manner. This is not limited in this embodiment of the present application.

It can be learned that, in this embodiment of the present application, the detection result information includes the error prompt information, so that the user can quickly and accurately locate, based on the error prompt information, the target image detection algorithm to be debugged, thereby helping improve debug efficiency.

In step S402, the parameter configuration file is updated based on an adjusted operation parameter.

In this step, the computer device may update the parameter configuration file based on the adjusted operation parameter received in step S401, to ensure accuracy of the parameter configuration file.

In an embodiment, the computer device may re-execute the target image detection algorithm for the target image based on the adjusted operation parameter of the target image detection algorithm to obtain first debug detection result information, and when the first debug detection result information meets a preset condition, perform the step of updating the parameter configuration file based on the adjusted operation parameter.

For example, the meeting a preset condition in this embodiment of the present application may include but is not limited to no error prompt information existing in the first debug detection result information corresponding to the target image.

In this implementation, the computer device may re-execute the target image detection algorithm for the corresponding target image based on the adjusted operation parameter of the target image detection algorithm to obtain the first debug detection result information. If the first debug detection result information meets the preset condition, that is, the operation parameter is debugged successfully, the computer device may update the parameter configuration file; otherwise, the computer device does not need to update the parameter configuration file. Therefore, in this implementation, the parameter configuration file can be updated when the operation parameter of the target image detection algorithm is debugged successfully, thereby improving efficiency of updating the parameter configuration file.

In this embodiment of the present application, the first parameter adjustment instruction used to request to adjust the operation parameter of the target image detection algorithm corresponding to the target image is received, and then the parameter configuration file is updated based on the adjusted operation parameter. This helps ensure accuracy of the parameter configuration file, so that the adjusted operation parameter can be used in subsequent image detection.

In an embodiment, on the basis of the foregoing embodiment, the method in this embodiment of the present application may further include the following steps:

The computer device receives a second parameter adjustment instruction, where the second parameter adjustment instruction is used to request to adjust a region of interest ROI parameter corresponding to the target image.

In this step, the computer device may receive the second parameter adjustment instruction that is input by the user on a debug sub-interface and that is used to request to adjust the region of interest ROI parameter corresponding to the target image.

For example, the debug sub-interface displays an ROI parameter modification region, so that the user can input an adjusted ROI parameter in the modification region.

Certainly, the computer device may alternatively receive the second parameter adjustment instruction in another manner.

Further, the computer device may re-execute, for the target image based on the adjusted ROI parameter, the target image detection algorithm corresponding to the target image to obtain second debug detection result information, where the second debug detection result information may be displayed in a debug image result corresponding to the target image. An ROI region corresponding to the adjusted ROI parameter may be further displayed in the debug image result, so that the user can view an adjusted ROI region, thereby facilitating subsequent debugging of the image detection algorithm.

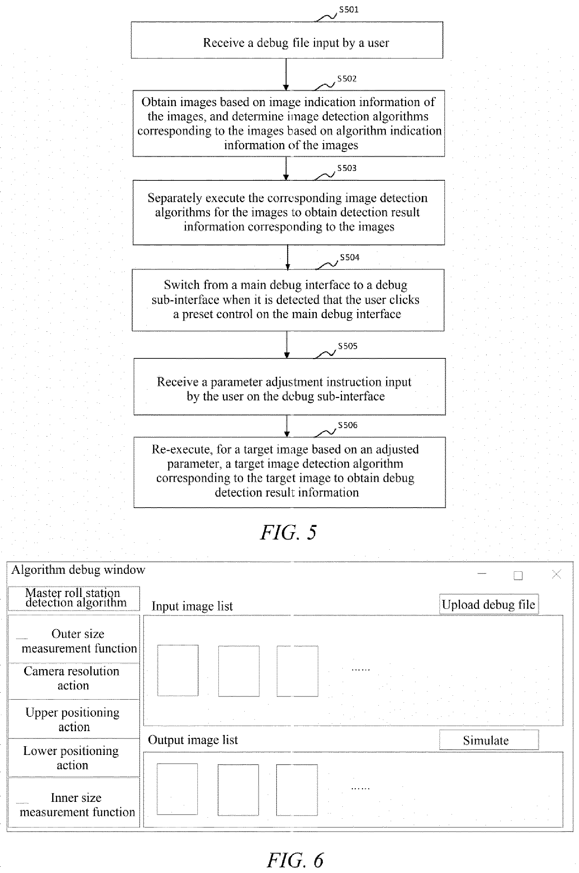

In an embodiment, FIG. 5 is a schematic flowchart of a method for debugging an image detection algorithm according to another embodiment of the present application. On the basis of the foregoing embodiment, an overall process of the method for debugging an image detection algorithm is described in this embodiment of the present application. As shown in FIG. 5, the method in this embodiment of the present application may further include the following steps:

In step S501, a computer device receives a debug file input by a user.

The debug file in this embodiment of the present application may include image indication information of a plurality of images and algorithm indication information of the images.

FIG. 6 is a schematic diagram of a main debug interface according to an embodiment of the present application. As shown in FIG. 6, the computer device may receive a debug file uploaded by the user by performing an operation on an "Upload debug file" control on the main debug interface. It should be understood that the computer device may display a debug file selection page (not shown in FIG. 6) on the main debug interface when detecting that the user clicks the "Upload debug file" control on the main debug interface, so that the user can select a debug file to be uploaded on the debug file selection page.

In step S502, the computer device obtains the images based on the image indication information of the images, and determines image detection algorithms corresponding to the images based on the algorithm indication information of the images.

In this step, the computer device may parse the obtained debug file to obtain the image indication information of the plurality of images and the algorithm indication information of the images. Further, the computer device may separately obtain the images based on the image indication information of the plurality of images, display the images in an input image list region, and separately determine the image detection algorithms corresponding to the images based on the algorithm indication information of the images.

It should be noted that an image detection algorithm corresponding to any image in this step may be a collective name of detection algorithms. For example, the image detection algorithm corresponding to the any image may be an image detection algorithm 1, or may be a detection action 1 and a detection action 2 in a detection function 1 of an image detection algorithm 1.

In step S503, the computer device separately executes the corresponding image detection algorithms for the images to obtain detection result information corresponding to the images.

In this step, as shown in FIG. 6, when detecting that the user clicks a "Simulate" control on the main debug interface, the computer device may separately execute the corresponding image detection algorithms for the images by calling a general algorithm interface, to obtain image results corresponding to the images, and display the image results corresponding to the images in an output image list region, where in the image results corresponding to the images, detection result information corresponding to the images may be displayed.

It should be understood that related information about the image detection algorithms corresponding to the images may be further displayed in FIG. 6. For example, it is assumed that the image detection algorithms corresponding to the images are a master roll station detection algorithm, and the master roll station detection algorithm includes an outer size measurement function and an inner size measurement function. The outer size measurement function may include a camera resolution action, an upper positioning action, and a lower positioning action.

It should be noted that the image detection algorithm, the detection functions, and the detection actions shown in FIG. 6 are all exemplary. Certainly, there may alternatively be other image detection algorithms, other detection functions, and other detection actions. This is not limited in this embodiment of the present application.

In step S504, the computer device switches from the main debug interface to a debug sub-interface when detecting that the user clicks a preset control on the main debug interface.

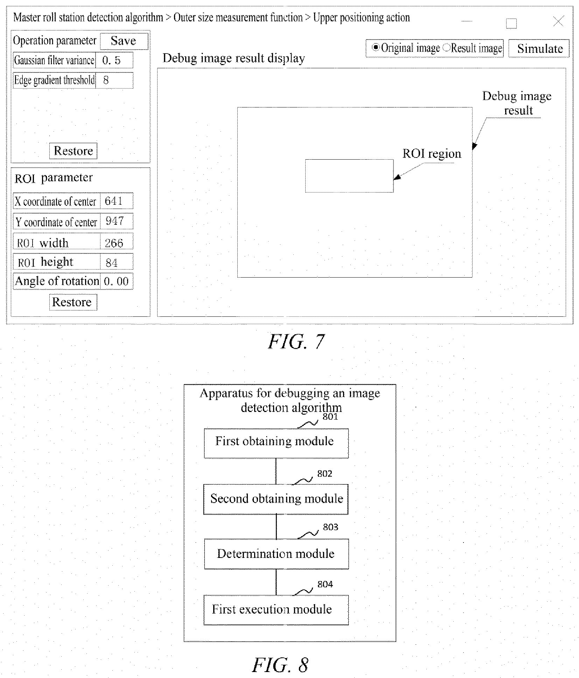

For example, when detecting that the user clicks a control corresponding to the upper positioning action in the outer size measurement function on the main debug interface, as shown in FIG. 6, the computer device switches from the main debug interface to a debug sub-interface, as shown in FIG. 7 (FIG. 7 is a schematic diagram of a debug sub-interface according to an embodiment of the present application).

In step S505, the computer device receives a parameter adjustment instruction input by the user on the debug sub-interface.

For example, the parameter adjustment instruction in this step may include a first parameter adjustment instruction and/or a second parameter adjustment instruction, where the first parameter adjustment instruction is used to request to adjust an operation parameter of a target image detection algorithm corresponding to a target image, and the second parameter adjustment instruction is used to request to adjust a region of interest ROI parameter corresponding to the target image.

As shown in FIG. 7, the computer device may receive an adjusted operation parameter that is input by the user in a modification region for an operation parameter corresponding to the upper positioning action on the debug sub-interface, and/or the computer device may receive an adjusted ROI parameter that is input by the user in an ROI parameter modification region on the debug sub-interface.

In step S506, the computer device re-executes, for the target image based on an adjusted parameter, the target image detection algorithm corresponding to the target image to obtain debug detection result information.

For example, the adjusted parameter in this step may include an adjusted operation parameter corresponding to the upper positioning action and/or an adjusted ROI parameter.

To sum up, in this embodiment of the present application, the images and the image detection algorithms corresponding to the images are obtained based on the debug file, and the corresponding image detection algorithms are executed for the images to obtain the detection result information corresponding to the images. Further, the target image detection algorithm is re-executed for the corresponding target image based on the adjusted parameter carried in the parameter adjustment instruction input by the user, to obtain the debug detection result information. It can be learned that, compared with the conventional technology, a debug process in this embodiment of the present application is simple, thereby helping improve debug efficiency.

It should be understood that although the steps in the flowcharts in the foregoing embodiments are shown sequentially according to the arrows, these steps are not necessarily executed sequentially in the order indicated by the arrows. Unless otherwise specified herein, there is no strict order limitation on the execution of these steps, and these steps can be executed in other orders. In addition, at least some of the steps in the flowcharts in the foregoing embodiments may include a plurality of steps or phases, and these steps or phases are not necessarily executed at the same time, but may be executed at different moments. These steps or phases are not necessarily executed sequentially, but may be executed in turn or alternately with other steps or at least part of steps in other steps or phases.

Based on the same inventive concept, an embodiment of the present application further provides a debugging apparatus for implementing the foregoing method for debugging an image detection algorithm. The implementation solution provided by the apparatus to the problem is similar to the implementation solution described in the foregoing method, and therefore, for specific limitations in the following one or more embodiments of an apparatus for debugging an image detection algorithm, reference may be made to the limitations on the method for debugging an image detection algorithm above. Details are not described herein again.

In an embodiment, FIG. 8 is a schematic diagram of a structure of an apparatus for debugging an image detection algorithm according to an embodiment of the present application. The apparatus for debugging an image detection algorithm provided in this embodiment of the present application may be applied to a computer device. As shown in FIG. 8, the apparatus for debugging an image detection algorithm in this embodiment of the present application may include a first obtaining module 801, a second obtaining module 802, a determination module 803, and a first execution module 804.

The first obtaining module 801 is configured to obtain a debug file, where the debug file includes image indication information of a plurality of images and algorithm indication information of the images.

The second obtaining module 802 is configured to obtain the images based on the image indication information of the images.

The determination module 803 is configured to determine image detection algorithms corresponding to the images based on the algorithm indication information of the images.

The first execution module 804 is configured to separately execute the corresponding image detection algorithms for the images to obtain detection result information corresponding to the images.

In an embodiment, the first execution module 804 includes:
a query unit configured to: for the images, query a parameter configuration file based on the image detection algorithms corresponding to the images, to obtain operation parameters of the image detection algorithms corresponding to the images; and
an execution unit configured to execute the corresponding image detection algorithms for the images based on the operation parameters of the image detection algorithms corresponding to the images, to obtain detection result information corresponding to the images.

In an embodiment, the parameter configuration file includes: operation parameters corresponding to different detection functions of different image detection algorithms, where the operation parameters corresponding to the detection functions include operation parameters of different detection actions in the detection functions, and the query unit is specifically configured to:
query the parameter configuration file based on the image detection algorithms corresponding to the images, to obtain an operation parameter, in the parameter configuration file, that corresponds to at least one detection function in the image detection algorithms corresponding to the images, where the operation parameter corresponding to the detection function includes an operation parameter of at least one detection action in the detection function.

In an embodiment, the apparatus further includes:
a receiving module configured to receive a first parameter adjustment instruction, where the first parameter adjustment instruction is used to request to adjust an operation parameter of a target image detection algorithm corresponding to a target image: and
a second execution module configured to update the parameter configuration file based on an adjusted operation parameter.

In an embodiment, the second execution module is specifically configured to:
re-execute the target image detection algorithm for the target image based on the adjusted operation parameter to obtain first debug detection result information; and
when the first debug detection result information meets a preset condition, perform the step of updating the parameter configuration file based on an adjusted operation parameter.

In an embodiment, the detection result information includes error prompt information, and the error prompt information is used to indicate to modify and debug an operation parameter of a target image detection algorithm corresponding to the error prompt information.

In an embodiment, the receiving module is further configured to receive a second parameter adjustment instruction, where the second parameter adjustment instruction is used to request to adjust a region of interest ROI parameter corresponding to the target image; and
the second execution module is further configured to re-execute, for the target image based on an adjusted ROI parameter, the target image detection algorithm corresponding to the target image to obtain second debug detection result information.

In an embodiment, the first obtaining module 801 includes:
an obtaining unit configured to: when the corresponding image detection algorithms are separately executed for the images, obtain the image indication information of the images and the algorithm indication information of the image detection algorithms corresponding to the images; and
a generation unit configured to generate the debug file based on the image indication information of the images and the algorithm indication information of the image detection algorithms corresponding to the images.

In an embodiment, the algorithm indication information includes an algorithm identifier, and the determination module 803 is specifically configured to:
query a correspondence between an algorithm identifier and a detection algorithm based on algorithm identifiers of the images, and determine the image detection algorithms corresponding to the images.

In an embodiment, the algorithm indication information includes capturing source information, and the determination module 803 is specifically configured to:
query a correspondence between an image capturing source and a detection algorithm based on capturing source information of the images. and determine the image detection algorithms corresponding to the images.

The apparatus for debugging an image detection algorithm in this embodiment of the present application may be configured to perform the technical solutions in the embodiments of the method for debugging an image detection algorithm in the present application, and implementation principles and technical effects thereof are similar. Details are not described herein again.

All or some of the modules in the apparatus for debugging an image detection algorithm may be implemented by using software, hardware, or a combination thereof. The foregoing modules can be built in or independent of a processor in the computer device in a form of hardware, or may be stored in a memory of the computer device in a form of software, so that the processor invokes and executes corresponding operations of the foregoing modules.

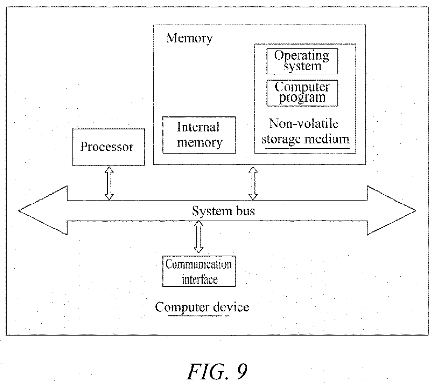

In an embodiment, FIG. 9 is a schematic diagram of a structure of a computer device according to an embodiment of the present application. As shown in FIG. 9, the computer device provided in this embodiment of the present application may include a processor, a memory, and a communication interface that are connected through a system bus. The processor of the computer device is configured to provide calculation and control capabilities. The memory of the computer device includes a non-volatile storage medium and an internal memory. The non-volatile storage medium stores an operating system and a computer program. The internal memory provides an environment for operation of the operating system and the computer program in the non-volatile storage medium. The communication interface of the computer device is used for wired or wireless communication with an external terminal. When the computer program is executed by the processor, the technical solutions in the embodiments of the method for debugging an image detection algorithm in the present application are implemented, and implementation principles and technical effects thereof are similar. Details are not described herein again.

Those skilled in the art can understand that the structure shown in FIG. 9 is only a block diagram of a partial structure related to the solution of the present application, and does not constitute a limitation to the computer device on which the solution of the present application is applied. A specific computer device may include more or fewer components than those shown in the figure, or may combine some components, or have a different arrangement of components.

In an embodiment, a computer device is further provided, including a memory and a processor. The memory stores a computer program. When the processor executes the computer program, the technical solutions in the embodiments of the method for debugging an image detection algorithm in the present application are implemented, and implementation principles and technical effects thereof are similar. Details are not described herein again.

In an embodiment, a computer-readable storage medium is provided. The computer-readable storage medium stores a computer program. When the computer program is executed by a processor, the technical solutions in the embodiments of the method for debugging an image detection algorithm in the present application are implemented, and implementation principles and technical effects thereof are similar. Details are not described herein again.

In an embodiment, a computer program product is provided, including a computer program. When the computer program is executed by a processor, the technical solutions in the embodiments of the method for debugging an image detection algorithm in the present application are implemented, and implementation principles and technical effects thereof are similar. Details are not described herein again.

Those of ordinary skill in the art can understand that all or some of the processes in the methods of the foregoing embodiments may be implemented by a computer program instructing relevant hardware, and the computer program may be stored in a non-volatile computer-readable storage medium. When the computer program is executed, the processes of the methods in the embodiments may be performed. Any reference to storage, database, or other media used in the embodiments provided in the present application may include at least one of a non-volatile memory and a volatile memory. The non-volatile memory may include a read-only memory (ROM), a magnetic tape, a floppy disk, a flash memory, an optical memory, a high-density embedded non-volatile memory, a resistive random access memory (ReRAM), a magnetoresistive random access memory (MRAM), a ferroelectric random access memory (FRAM), a phase change memory (PCM), a graphene memory, etc. The volatile memory may include a random access memory (RAM) or an external cache. etc. As an illustration and not a limitation, the RAM can be in various forms, such as a static random access memory (SRAM) or a dynamic random access memory (DRAM). The processor in the embodiments provided by the present application may be a general-purpose processor, a central processing unit, a graphics processing unit, a digital signal processor, a programmable logic device, a data processing logic device based on quantum computing, etc., and is not limited thereto.

The various technical features of the foregoing embodiments may be combined in any manner, and to simplify the description, not all possible combinations of the various technical features of the foregoing embodiments are described. However, provided that there is no conflict between the combinations of these technical features, they should be considered to be within the scope of the description in this specification.

The foregoing embodiments merely describe several implementations of the present application more specifically and in more detail, but cannot be thus understood as a limitation to the patent scope of the present application. It should be noted that those of ordinary skill in the art may also make several variations and improvements without departing from the concept of the present application. All these variations and improvements fall within the protection scope of the present application. Therefore, the protection scope of the present application shall be subject to the appended claims.

## Claims

1. A method for debugging an image detection algorithm, wherein the method comprises:
obtaining a debug file, wherein the debug file comprises image indication information of a plurality of images and algorithm indication information of the images;
obtaining the images based on the image indication information of the images, and determining image detection algorithms corresponding to the images based on the algorithm indication information of the images; and
separately executing the corresponding image detection algorithms for the images to obtain detection result information corresponding to the images; wherein the detection result information is used to indicate to modify and debug an operation parameter of an image detection algorithm related to the detection result information, **characterized in that** the separately executing the corresponding image detection algorithms for the images to obtain detection result information corresponding to the images comprises:
for the images, querying a parameter configuration file based on the image detection algorithms corresponding to the images, to obtain operation parameters of the image detection algorithms corresponding to the images; and
executing the corresponding image detection algorithms for the images based on the operation parameters of the image detection algorithms corresponding to the images, to obtain detection result information corresponding to the images; that the parameter configuration file comprises: operation parameters corresponding to different detection functions of different image detection algorithms, wherein the operation parameters corresponding to the detection functions comprise operation parameters of different detection actions in the detection functions, and the querying a parameter configuration file based on the image detection algorithms corresponding to the images, to obtain operation parameters of the image detection algorithms corresponding to the images comprises:
querying the parameter configuration file based on the image detection algorithms corresponding to the images, to obtain an operation parameter, in the parameter configuration file, that corresponds to at least one detection function in the image detection algorithms corresponding to the images, wherein the operation parameter corresponding to the detection function comprises an operation parameter of at least one detection action in the detection function; and that detection functions of the image detection algorithm are grouped based on the images, or the images are grouped based on detection functions.

2. The method according to claim 1, wherein the method further comprises:
receiving a first parameter adjustment instruction, wherein the first parameter adjustment instruction is used to request to adjust an operation parameter of a target image detection algorithm corresponding to a target image; and
updating the parameter configuration file based on an adjusted operation parameter.

3. The method according to claim 2, wherein the updating the parameter configuration file based on an adjusted operation parameter comprises:
re-executing the target image detection algorithm for the target image based on the adjusted operation parameter to obtain first debug detection result information; and
when the first debug detection result information meets a preset condition, performing the step of updating the parameter configuration file based on an adjusted operation parameter.

4. The method according to any one of claims 1 to 3, wherein the detection result information comprises error prompt information, and the error prompt information is used to indicate to modify and debug an operation parameter of a target image detection algorithm corresponding to the error prompt information.

5. The method according to any one of claims 1 to 3, wherein the method further comprises:
receiving a second parameter adjustment instruction, wherein the second parameter adjustment instruction is used to request to adjust a region of interest ROI parameter corresponding to the target image; and
re-executing, for the target image based on an adjusted ROI parameter, the target image detection algorithm corresponding to the target image to obtain second debug detection result information.

6. The method according to any one of claims 1 to 5, wherein the obtaining a debug file comprises:
when the corresponding image detection algorithms are separately executed for the images, obtaining the image indication information of the images and the algorithm indication information corresponding to the images; and
generating the debug file based on the image indication information of the images and the algorithm indication information corresponding to the images.

7. The method according to any one of claims 1 to 5, wherein the algorithm indication information comprises an algorithm identifier, and the determining image detection algorithms corresponding to the images based on the algorithm indication information of the images comprises:
querying a correspondence between an algorithm identifier and a detection algorithm based on algorithm identifiers of the images, and determining the image detection algorithms corresponding to the images.

8. The method according to any one of claims 1 to 5, wherein the algorithm indication information comprises capturing source information, and the determining image detection algorithms corresponding to the images based on the algorithm indication information of the images comprises:
querying a correspondence between an image capturing source and a detection algorithm based on capturing source information of the images, and determining the image detection algorithms corresponding to the images.

9. An apparatus for debugging an image detection algorithm, wherein the apparatus comprises:
a first obtaining module (801) configured to obtain a debug file, wherein the debug file comprises image indication information of a plurality of images and algorithm indication information of the images;
a second obtaining module (802) configured to obtain the images based on the image indication information of the images;
a determination module (803) configured to determine image detection algorithms corresponding to the images based on the algorithm indication information of the images; and
an execution module (804) configured to separately execute the corresponding image detection algorithms for the images to obtain detection result information corresponding to the images;
wherein the detection result information is used to indicate to modify and debug an operation parameter of an image detection algorithm related to the detection result information;
**characterized in that** the separately executing the corresponding image detection algorithms for the images to obtain detection result information corresponding to the images comprises:
for the images, querying a parameter configuration file based on the image detection algorithms corresponding to the images, to obtain operation parameters of the image detection algorithms corresponding to the images; and
executing the corresponding image detection algorithms for the images based on the operation parameters of the image detection algorithms corresponding to the images, to obtain detection result information corresponding to the images;
that the parameter configuration file comprises: operation parameters corresponding to different detection functions of different image detection algorithms, wherein the operation parameters corresponding to the detection functions comprise operation parameters of different detection actions in the detection functions, and the querying a parameter configuration file based on the image detection algorithms corresponding to the images, to obtain operation parameters of the image detection algorithms corresponding to the images comprises:
querying the parameter configuration file based on the image detection algorithms corresponding to the images, to obtain an operation parameter, in the parameter configuration file, that corresponds to at least one detection function in the image detection algorithms corresponding to the images, wherein the operation parameter corresponding to the detection function comprises an operation parameter of at least one detection action in the detection function; and
that detection functions of the image detection algorithm are grouped based on the images, or the images are grouped based on detection functions.

10. A computer device, comprising a processor and a memory, wherein the memory stores a computer program, and when the processor executes the computer program, the steps of a method according to any one of claims 1 to 8 are implemented.

11. A computer-readable storage medium, storing a computer program, wherein when the computer program is executed by a processor, the steps of a method according to any one of claims 1 to 8 are implemented.

12. A computer program product, comprising a computer program, wherein when the computer program is executed by a processor, the steps of a method according to any one of claims 1 to 8 are implemented.

## Patentansprüche

1. Verfahren zum Debuggen eines Bilderkennungsalgorithmus, wobei das Verfahren Folgendes umfasst:
Erhalten einer Debug-Datei, wobei die Debug-Datei Bildanzeigeinformationen einer Vielzahl von Bildern und Algorithmusanzeigeinformationen der Bilder umfasst:
Erhalten der Bilder basierend auf den Bildanzeigeinformationen der Bilder, und Bestimmen von den Bildern entsprechenden Bilderkennungsalgorithmen basierend auf den Algorithmusanzeigeinformationen der Bilder; und
separates Ausführen der entsprechenden Bilderkennungsalgorithmen für die Bilder, um den Bildern entsprechende Erkennungsergebnisinformationen zu erhalten; wobei die Erkennungsergebnisinformationen verwendet werden, um einen Betriebsparameter eines Bilderkennungsalgorithmus in Verbindung mit den Erkennungsergebnisinformationen zu ändern und debuggen, **dadurch gekennzeichnet, dass** das separate Ausführen der entsprechenden Bilderkennungsalgorithmen für die Bilder, um den Bildern entsprechende Erkennungsergebnisinformationen zu erhalten, Folgendes umfasst:
für die Bilder, Abfragen einer Parameterkonfigurationsdatei basierend auf den den Bildern entsprechenden Bilderkennungsalgorithmen, um Betriebsparameter der den Bilder entsprechenden Bilderkennungsalgorithmen zu erhalten; und
Ausführen der entsprechenden Bilderkennungsalgorithmen für die Bilder basierend auf den Betriebsparametern der den Bildern entsprechenden Bilderkennungsalgorithmen, um den Bildern entsprechende Erkennungsergebnisinformationen zu erhalten; dass die Parameterkonfigurationsdatei Folgendes umfasst: Betriebsparameter entsprechend verschiedenen Erkennungsfunktionen verschiedener Bilderkennungsalgorithmen, wobei die Betriebsparameter entsprechend den Erkennungsfunktionen Betriebsparameter verschiedener Erkennungsaktionen in den Erkennungsfunktionen umfassen, und das Abfragen einer Parameterkonfigurationsdatei basierend auf den den Bildern entsprechenden Bilderkennungsalgorithmen, um Betriebsparameter der den Bildern entsprechenden Bilderkennungsalgorithmen zu erhalten, Folgendes umfasst:
Abfragen der Parameterkonfigurationsdatei basierend auf den den Bildern entsprechenden Bilderkennungsalgorithmen, um einen Betriebsparameter in der Parameterkonfigurationsdatei zu erhalten, der mindestens einer Erkennungsfunktion in den den Bildern entsprechenden Bilderkennungsalgorithmen entspricht, wobei der Betriebsparameter, der der Erkennungsfunktion entspricht, einen Betriebsparameter mindestens einer Erkennungsaktion in der Erkennungsfunktion umfasst; und dass Erkennungsfunktionen des Bilderkennungsalgorithmus basierend auf den Bildern gruppiert werden oder die Bilder basierend auf Erkennungsfunktionen gruppiert werden.

2. Verfahren nach Anspruch 1, wobei das Verfahren ferner Folgendes umfasst:
Empfangen einer ersten Parameteranpassungsanweisung, wobei die erste Parameteranpassungsanweisung verwendet wird, um anzufordern, einen Betriebsparameter eines Zielbilderkennungsalgorithmus entsprechend einem Zielbild anzupassen; und
Aktualisieren der Parameterkonfigurationsdatei basierend auf einem angepassten Betriebsparameter.

3. Verfahren nach Anspruch 2, wobei das Aktualisieren der Parameterkonfigurationsdatei basierend auf einem angepassten Betriebsparameter Folgendes umfasst:
erneutes Ausführen des Zielbilderkennungsalgorithmus für das Zielbild basierend auf dem angepassten Betriebsparameter, um erste Debug-Erkennungsergebnisinformationen zu erhalten; und
wenn die ersten Debug-Erkennungsergebnisinformationen eine vorab festgelegte Bedingung erfüllen, Durchführen des Schritts des Aktualisierens der Parameterkonfigurationsdatei basierend auf einem angepassten Betriebsparameter.

4. Verfahren nach einem der Ansprüche 1 bis 3, wobei die Erkennungsergebnisinformationen Fehleraufforderungsinformationen umfassen und die Fehleraufforderungsinformationen verwendet werden, um anzuzeigen, einen Betriebsparameter eines Zielbilderkennnungsalgorithmus entsprechend den Fehleraufforderungsinformationen zu ändern und debuggen.

5. Verfahren nach einem der Ansprüche 1 bis 3, wobei das Verfahren ferner Folgendes umfasst:
Empfangen einer zweiten Parameteranpassungsanweisung, wobei die zweite Parameteranpassungsanweisung verwendet wird, um anzufordern, einen Parameter eines interessierenden Bereichs (ROI) anzupassen, der dem Zielbild entspricht; und
erneutes Ausführen, für das Zielbild basierend auf einem angepassten ROI-Parameter, des Zielbilderkennungsalgorithmus entsprechend dem Zielbild, um zweite Debug-Erkennungsergebnisinformationen zu erhalten.

6. Verfahren nach einem der Ansprüche 1 bis 5, wobei das Erhalten einer Debug-Datei Folgendes umfasst:
wenn die entsprechenden Bilderkennungsalgorithmen separat für die Bilder ausgeführt werden, Erhalten der Bildanzeigeinformationen der Bilder und der Algorithmusanzeigeinformationen, die den Bildern entsprechen; und
Erzeugen der Debug-Datei basierend auf den Bildanzeigeinformationen der Bilder und den Algorithmusanzeigeinformationen, die den Bildern entsprechen.

7. Verfahren nach einem der Ansprüche 1 bis 5, wobei die Algorithmusanzeigeinformationen eine Algorithmuskennung umfassen, und das Bestimmen von den Bildern entsprechenden Bilderkennungsalgorithmen basierend auf den Algorithmusanzeigeinformationen der Bilder Folgendes umfasst:
Abfragen einer Entsprechung zwischen einer Algorithmuskennung und einem Erkennungsalgorithmus basierend auf Algorithmuskennungen der Bilder, und Bestimmen der den Bildern entsprechenden Bilderkennungsalgorithmen.

8. Verfahren nach einem der Ansprüche 1 bis 5, wobei die Algorithmusanzeigeinformationen Aufnahmequellinformationen umfassen, und das Bestimmen von den Bildern entsprechenden Bilderkennungsalgorithmen basierend auf den Algorithmusanzeigeinformationen der Bilder Folgendes umfasst:
Abfragen einer Entsprechung zwischen einer Bildaufnahmequelle und einem Erkennungsalgorithmus basierend auf den Aufnahmequellinformationen der Bilder, und Bestimmen der den Bildern entsprechenden Bilderkennungsalgorithmen.

9. Vorrichtung zum Debuggen eines Bilderkennungsalgorithmus, wobei die Vorrichtung Folgendes umfasst:
ein erstes Erhaltungsmodul (801), das konfiguriert ist, um eine Debug-Datei zu erhalten, wobei die Debug-Datei Bildanzeigeinformationen einer Vielzahl von Bildern und Algorithmusanzeigeinformationen der Bilder umfasst;
ein zweites Erhaltungsmodul (802), das konfiguriert ist, um die Bilder basierend auf den Bildanzeigeinformationen der Bilder zu erhalten;
ein Bestimmungsmodul (803), das konfiguriert ist, um den Bildern entsprechenden Bilderkennungsalgorithmen basierend auf den Algorithmusanzeigeinformationen der Bilder zu bestimmen; und
ein Ausführungsmodul (804), das konfiguriert ist, um separat die entsprechenden Bilderkennungsalgorithmen für die Bilder auszuführen, um den Bildern entsprechende Erkennungsergebnisinformationen zu erhalten;
wobei die Erkennungsergebnisinformationen verwendet werden, um anzuzeigen, einen Betriebsparameter eines Bilderkennungsalgorithmus in Verbindung mit den Erkennungsergebnisinformationen zu ändern und debuggen;
**dadurch gekennzeichnet, dass** das separate Ausführen der entsprechenden Bilderkennungsalgorithmen für die Bilder, um den Bildern entsprechende Erkennungsergebnisinformationen zu erhalten, Folgendes umfasst:
für die Bilder, Abfragen einer Parameterkonfigurationsdatei basierend auf den den Bildern entsprechenden Bilderkennungsalgorithmen, um Betriebsparameter der den Bildern entsprechenden Bilderkennungsalgorithmen zu erhalten; und
Ausführen der entsprechenden Bilderkennungsalgorithmen für die Bilder basierend auf den Betriebsparametern der den Bildern entsprechenden Bilderkennungsalgorithmen, um den Bildern entsprechende Erkennungsergebnisinformationen zu erhalten;
dass die Parameterkonfigurationsdatei Folgendes umfasst: Betriebsparameter entsprechend verschiedenen Erkennungsfunktionen verschiedener Bilderkennungsalgorithmen, wobei die Betriebsparameter entsprechend den Erkennungsfunktionen Betriebsparameter verschiedener Erkennungsaktionen in den Erkennungsfunktionen umfassen, und das Abfragen einer Parameterkonfigurationsdatei basierend auf den den Bildern entsprechenden Bilderkennungsalgorithmen, um Betriebsparameter der den Bildern entsprechenden Bilderkennungsalgorithmen zu erhalten, Folgendes umfasst:
Abfragen der Parameterkonfigurationsdatei basierend auf den den Bildern entsprechenden Bilderkennungsalgorithmen, um einen Betriebsparameter in der Parameterkonfigurationsdatei zu erhalten, der mindestens einer Erkennungsfunktion in den den Bildern entsprechenden Bilderkennungsalgorithmen entspricht, wobei der Betriebsparameter, der der Erkennungsfunktion entspricht, einen Betriebsparameter mindestens einer Erkennungsaktion in der Erkennungsfunktion umfasst; und
dass Erkennungsfunktionen des Bilderkennungsalgorithmus basierend auf den Bildern gruppiert werden oder die Bilder basierend auf Erkennungsfunktionen gruppiert werden.

10. Computervorrichtung, umfassend einen Prozessor und einen Speicher, wobei der Speicher ein Computerprogramm speichert, und wenn der Prozessor das Computerprogramm ausführt, die Schritte eines Verfahrens nach einem der Ansprüche 1 bis 8 implementiert werden.

11. Computerlesbares Speichermedium, das ein Computerprogramm speichert, wobei, wenn das Computerprogramm von einem Prozessor ausgeführt wird, die Schrittes eines Verfahrens nach einem der Ansprüche 1 bis 8 implementiert werden.

12. Computerprogrammprodukt, umfassend ein Computerprogramm, wobei, wenn das Computerprogramm von einem Prozessor ausgeführt wird, die Schritte eines Verfahrens nach einem der Ansprüche 1 bis 8 implementiert werden.

## Revendications

1. Procédé de débogage d'un algorithme de détection d'image, dans lequel le procédé comprend :
l'obtention d'un fichier de débogage, dans lequel le fichier de débogage comprend des informations d'indication d'image d'une pluralité d'images et des informations d'indication d'algorithme des images ;
l'obtention des images sur la base des informations d'indication d'image des images, et la détermination des algorithmes de détection d'image correspondant aux images sur la base des informations d'indication d'algorithme des images ; et
l'exécution séparément des algorithmes de détection d'image correspondants pour les images pour obtenir des informations de résultat de détection correspondant aux images ; dans lequel les informations de résultat de détection sont utilisées pour indiquer qu'il faut modifier ou déboguer un paramètre de fonctionnement d'un algorithme de détection d'image concernant les informations de résultat de détection, **caractérisé en ce que** l'exécution séparée des algorithmes de détection d'image correspondants pour les images pour obtenir des informations de résultat de détection correspondant aux images comprend :
pour les images, l'interrogation d'un fichier de configuration de paramètres sur la base des algorithmes de détection d'images correspondant aux images, pour obtenir des paramètres de fonctionnement des algorithmes de détection d'images correspondant aux images ; et
l'exécution des algorithmes de détection d'image correspondants pour les images sur la base des paramètres de fonctionnement des algorithmes de détection d'image correspondant aux images, pour obtenir des informations de résultat de détection correspondant aux images ; dans lequel le fichier de configuration de paramètres comprend : des paramètres de fonctionnement correspondant à différentes fonctions de détection de différents algorithmes de détection d'image, dans lequel les paramètres de fonctionnement correspondant aux fonctions de détection comprennent des paramètres de fonctionnement de différentes actions de détection dans les fonctions de détection, et l'interrogation d'un fichier de configuration de paramètres sur la base des algorithmes de détection d'image correspondant aux images, pour obtenir des paramètres de fonctionnement des algorithmes de détection d'image correspondant aux images comprend :
l'interrogation du fichier de configuration de paramètres sur la base des algorithmes de détection d'images correspondant aux images, pour obtenir un paramètre de fonctionnement, dans le fichier de configuration de paramètres, qui correspond à au moins une fonction de détection dans les algorithmes de détection d'images correspondant aux images, dans lequel le paramètre de fonctionnement correspondant à la fonction de détection comprend un paramètre de fonctionnement d'au moins une action de détection dans la fonction de détection ; et dans lequel les fonctions de détection de l'algorithme de détection d'image sont groupées sur la base des images, ou les images sont groupées sur la base de fonctions de détection.

2. Procédé selon la revendication 1, dans lequel le procédé comprend en outre :
la réception d'une première instruction de réglage de paramètre, dans lequel la première instruction de réglage de paramètre est utilisée pour demander de régler un paramètre de fonctionnement d'un algorithme de détection d'image cible correspondant à une image cible ; et
la mise à jour du fichier de configuration de paramètres sur la base d'un paramètre de fonctionnement réglé.

3. Procédé selon la revendication 2, dans lequel la mise à jour du fichier de configuration de paramètres sur la base d'un paramètre de fonctionnement réglé comprend :
la re-exécution de l'algorithme de détection d'image cible pour l'image cible sur la base du paramètre de fonctionnement réglé pour obtenir des premières informations de résultat de détection de débogage ; et
lorsque les premières informations de résultat de détection de débogage remplissent une condition prédéfinie, la réalisation de l'étape de mise à jour du fichier de configuration de paramètres sur la base d'un paramètre de fonctionnement réglé.

4. Procédé selon l'une quelconque des revendications 1 à 3, dans lequel les informations de résultat de détection comprennent des informations d'invite d'erreur, et les informations d'invite d'erreur sont utilisées pour indiquer qu'il faut modifier et déboguer un paramètre de fonctionnement d'un algorithme de détection d'image cible correspondant aux informations d'invite d'erreur.

5. Procédé selon l'une quelconque des revendications 1 à 3, dans lequel le procédé comprend en outre :
la réception d'une deuxième instruction de réglage de paramètre, dans lequel la deuxième instruction de réglage de paramètre est utilisée pour demander de régler un paramètre de région d'intérêt ROI correspondant à l'image cible ; et
la re-exécution, pour l'image cible sur la base d'un paramètre de ROI réglé, de l'algorithme de détection d'image cible correspondant à l'image cible pour obtenir des deuxièmes informations de résultat de détection de débogage.

6. Procédé selon l'une quelconque des revendications 1 à 5, dans lequel l'obtention d'un fichier de débogage comprend :
lorsque les algorithmes de détection d'image correspondants sont exécutés séparément pour les images, l'obtention des informations d'indication d'image des images et des informations d'indication d'algorithme correspondant aux images ; et
la génération du fichier de débogage sur la base des informations d'indication d'image des images et des informations d'indication d'algorithme correspondant aux images.

7. Procédé selon l'une quelconque des revendications 1 à 5, dans lequel les informations d'indication d'algorithme comprennent un identifiant d'algorithme, et la détermination d'algorithmes de détection d'image correspondant aux images sur la base des informations d'indication d'algorithme des images comprend :
l'interrogation d'une correspondance entre un identifiant d'algorithme et un algorithme de détection sur la base d'identifiants d'algorithme des images, et la détermination des algorithmes de détection d'image correspondant aux images.

8. Procédé selon l'une quelconque des revendications 1 à 5, dans lequel les informations d'indication d'algorithme comprennent la capture d'informations de source, et la détermination d'algorithmes de détection d'image correspondant aux images sur la base des informations d'indication d'algorithme des images comprend :
l'interrogation d'une correspondance entre une source de capture d'image et un algorithme de détection sur la base de la capture d'informations de source des images, et la détermination des algorithmes de détection d'image correspondant aux images.

9. Appareil destiné à déboguer un algorithme de détection d'image, dans lequel l'appareil comprend :
un premier module d'obtention (801) configuré pour obtenir un fichier de débogage, dans lequel le fichier de débogage comprend des informations d'indication d'image d'une pluralité d'images et des informations d'indication d'algorithme des images ;
un deuxième module d'obtention (802) configuré pour obtenir les images à partir des informations d'indication d'image des images ;
un module de détermination (803) configuré pour déterminer des algorithmes de détection d'images correspondant aux images sur la base des informations d'indication d'algorithmes des images ; et
un module d'exécution (804) configuré pour exécuter séparément les algorithmes de détection d'images correspondants pour les images pour obtenir des informations de résultat de détection correspondant aux images ;
dans lequel les informations de résultat de détection sont utilisées pour indiquer qu'il faut modifier ou déboguer un paramètre de fonctionnement d'un algorithme de détection d'image concernant les informations de résultat de détection,
**caractérisé en ce que** l'exécution séparée des algorithmes de détection d'image correspondants pour les images pour obtenir des informations de résultat de détection correspondant aux images comprend :
pour les images, l'interrogation d'un fichier de configuration de paramètres sur la base des algorithmes de détection d'images correspondant aux images, pour obtenir des paramètres de fonctionnement des algorithmes de détection d'images correspondant aux images ; et
l'exécution des algorithmes de détection d'image correspondants pour les images sur la base des paramètres de fonctionnement des algorithmes de détection d'image correspondant aux images, pour obtenir des informations de résultat de détection correspondant aux images ;
dans lequel le fichier de configuration de paramètres comprend : des paramètres de fonctionnement correspondant à différentes fonctions de détection de différents algorithmes de détection d'image, dans lequel les paramètres de fonctionnement correspondant aux fonctions de détection comprennent des paramètres de fonctionnement de différentes actions de détection dans les fonctions de détection, et l'interrogation d'un fichier de configuration de paramètres sur la base des algorithmes de détection d'image correspondant aux images, pour obtenir des paramètres de fonctionnement des algorithmes de détection d'image correspondant aux images comprend :
l'interrogation du fichier de configuration de paramètres sur la base des algorithmes de détection d'images correspondant aux images, pour obtenir un paramètre de fonctionnement, dans le fichier de configuration de paramètres, qui correspond à au moins une fonction de détection dans les algorithmes de détection d'images correspondant aux images, dans lequel le paramètre de fonctionnement correspondant à la fonction de détection comprend un paramètre de fonctionnement d'au moins une action de détection dans la fonction de détection ; et
dans lequel les fonctions de détection de l'algorithme de détection d'image sont groupées sur la base des images, ou les images sont groupées sur la base de fonctions de détection.

10. Dispositif informatique, comprenant un processeur et une mémoire, dans lequel la mémoire stocke un programme informatique, et lorsque le processeur exécute le programme informatique, les étapes d'un procédé selon l'une quelconque des revendications 1 à 8 sont mises en œuvre.

11. Support de stockage lisible par ordinateur, stockant un programme informatique, dans lequel lorsque le programme informatique est exécuté par un processeur, les étapes d'un procédé selon l'une quelconque des revendications 1 à 8 sont mises en œuvre.

12. Produit-programme d'ordinateur, comprenant un programme informatique, dans lequel lorsque le programme informatique est exécuté par un processeur, les étapes d'un procédé selon l'une quelconque des revendications 1 à 8 sont mises en œuvre.
